# EUROPÄISCHE PATENTSCHRIFT

(11) **EP 3 899 706 B1**
(45) Veröffentlichungstag und Bekanntmachung des Hinweises auf die Patenterteilung: **30.10.2024**
(21) Anmeldenummer: 19824266.1
(22) Anmeldetag: 11.12.2019
(51) Int. Cl.: G08G 1/01, G08G 1/015, G08G 1/052, G06F 3/0484, G06F 3/04847, G06F 3/0486, G06F 3/04883

(54) **VERFAHREN UND STEUERGERÄT ZUM EINRICHTEN EINER VERKEHRSÜBERWACHUNG FÜR EINEN ÜBERWACHUNGSORT UND SYSTEM ZUM DURCHFÜHREN EINER VERKEHRSÜBERWACHUNG FÜR EINEN ÜBERWACHUNGSORT**
METHOD AND CONTROLLER FOR SETTING UP TRAFFIC MONITORING FOR A MONITORING LOCATION, AND SYSTEM FOR CARRYING OUT TRAFFIC MONITORING FOR A MONITORING LOCATION
PROCÉDÉ ET UNITÉ DE COMMANDE POUR METTRE EN PLACE UNE SURVEILLANCE DE TRAFIC POUR UN SITE DE SURVEILLANCE ET SYSTÈME POUR EFFECTUER UNE SURVEILLANCE DE TRAFIC POUR UN SITE DE SURVEILLANCE

(30) Priorität: 20.12.2018 DE 102018133178
(43) Veröffentlichungstag der Anmeldung: 27.10.2021
(73) Patentinhaber: Jenoptik Robot GmbH, 40789 Monheim (DE)
(72) Erfinder: GIERSIEPEN, Beate, 40764 Langenfeld (DE); SCHWARZ, Matthias, 40589 Düsseldorf (DE); DORAU, Rainer, 40217 Düsseldorf (DE); KIENITZ, Stefan, 47249 Duisburg (DE)
(74) Vertreter: Waldauf, Alexander
(86) Internationale Anmeldenummer: PCT/EP2019/084713
(87) Internationale Veröffentlichungsnummer: WO 2020/126761

(56) Entgegenhaltungen:
- DE-A1- 102005 035 242
- DE-A1- 102011 084 802
- US-A1- 2017 251 142

## Beschreibung

Die Erfindung betrifft ein Verfahren zum Einrichten einer Verkehrsüberwachung für einen Überwachungsort, ein entsprechendes Steuergerät und ein System zum Durchführen einer Verkehrsüberwachung für einen Überwachungsort.

Verkehrsüberwachungsanlagen können immer mehr unterschiedliche Verkehrsregeln einzeln oder in Kombination überwachen. Eine steigende Anzahl an Möglichkeiten kann insbesondere eine Einrichtung solcher Anlagen und Systeme komplexer machen. Es ist auch eine Erkennung verkehrsrelevanter Informationen in einem fahrenden Fahrzeug bekannt, wobei Sensordaten eines Sensors und Kartendaten eines Navigationssystems zur Erkennung interpretiert werden. Ein solches Konzept ist in der DE 10 2008 023 972 A1 offenbart. Die DE 10 2011 084 802 A1 offenbart eine Anzeige- und Bedieneinrichtung mit einem berührungsempfindlichen Anzeigefeld über das Parameter eines Parametervektors verändert werden können. Zur Einstellung von Parametern wird dabei eine Struktur aus kreis- beziehungsweise ringförmigen Elementen verwendet, auf deren Umfang ein entsprechendes Berührungselement positioniert ist.

Vor diesem Hintergrund werden mit dem hier vorgestellten Ansatz ein Verfahren zum Einrichten einer Verkehrsüberwachung für einen Überwachungsort, ein Steuergerät, das dieses Verfahren verwendet, ein entsprechendes Computerprogramm sowie schließlich ein entsprechendes maschinenlesbares Speichermedium gemäß den Hauptansprüchen 1 und 4-6 vorgestellt. Vorteilhafte Ausgestaltungen und Weiterbildungen der Erfindung ergeben sich aus den nachfolgenden Unteransprüchen.

Die mit dem vorgestellten Ansatz erreichbaren Vorteile bestehen unter anderem darin, dass eine effiziente und intuitive Konfiguration von Verkehrsüberwachungsanlagen erreicht werden kann, wobei technische Zusammenhänge deutlich erkennbar gemacht werden können und Fehlkonfigurationen minimiert oder vermieden werden können. Auch kann eine verbesserte sogenannte Usability und User-Experience realisiert werden. Zur Einrichtung der Verkehrsüberwachung können Anforderungen an Benutzer bzw. Anwender reduziert werden, insbesondere kann auch ein Schulungsaufwand zur Einrichtung verringert werden. Ein Benutzer kann beispielsweise auch im Alltag Erlerntes direkt anwenden. Die vorstehend genannten und weitere Vorteile können insbesondere über eine Konfiguration von Parametern für eine zweistufige, visuell unterstützte Einrichtung von Verkehrsüberwachungsplätzen auf Basis einer schematischen Darstellung des Verkehrsüberwachungsplatzes und einer Position und Ausrichtung eines Verkehrsüberwachungssystems mit Trennung zwischen fachlicher und technischer Ebene realisiert werden. Neben Parametern, welche eine Geometrie und geltende Regularien eines Überwachungsortes bzw. Messplatzes beschreiben, können dem Überwachungssystem bzw. Messsystem auf einfache und sichere Weise auch Parameter zu Aufstellung, Ausrichtung und Aufgabe des Überwachungsgerätes bzw. der Messanlage bekannt gemacht werden. Diese Parametrisierung kann hierbei durchgeführt werden, wobei dem Anwender lediglich ein reduziertes Maß an Abstraktionsfähigkeit, technischem Wissen, Fachkenntnis und Fachterminologie für die Einrichtung abverlangt wird.

Es wird ein Verfahren gemäß Anspruch 1 zum Einrichten einer Verkehrsüberwachung für einen Überwachungsort vorgestellt.

Die Verkehrsüberwachung kann hierbei eine Geschwindigkeitsüberwachung, eine Mautüberwachung, eine Parkraumüberwachung eine Überwachung hinsichtlich der Einhaltung der öffentlichen Ordnung und zusätzlich oder alternativ eine andere Art der Überwachung im öffentlichen Raum repräsentieren. Die Benutzerschnittstelle kann eine Anzeigeeinrichtung zum Anzeigen von durch das Anzeigesignal repräsentierten Bildsymbolen aufweisen. Auch kann die Benutzerschnittstelle eine Erfassungseinrichtung zum Erfassen der auf der gestischen Wechselwirkung basierenden Eingabe aufweisen. Die gestische Wechselwirkung kann eine Geste oder Reihe von Gesten aus dem Bereich der Gestensteuerung und zusätzlich oder alternativ aus dem Bereich der Bedienung berührungsempfindlicher Eingabegeräte umfassen. Die gestische Wechselwirkung kann zumindest eine Berührungsgeste, eine einfache Berührung und zusätzlich oder alternativ eine in der Luft durchgeführte Geste umfassen. Auch kann die gestische Wechselwirkung zumindest eine kontinuierliche Geste und zusätzlich oder alternativ zumindest eine diskrete Geste umfassen. Die gestische Wechselwirkung kann mit und zusätzlich oder alternativ ohne Berührung der Benutzerschnittstelle erfolgen. Dem zumindest einen Bildsymbol kann zumindest ein Parameter zugeordnet sein, der durch Wechselwirkung mit dem Bildsymbol konfigurierbar ist.

Gemäß einer Ausführungsform kann im Schritt des Ausgebens das Anzeigesignal an eine berührungsempfindliche und zusätzlich oder alternativ berührungsfreie Benutzerschnittstelle ausgegeben werden. Im Schritt des Einlesens kann hierbei das Benutzereingabesignal von der berührungsempfindlichen und zusätzlich oder alternativ berührungsfreien Benutzerschnittstelle eingelesen werden. Die gestische Wechselwirkung kann mittels der Benutzerschnittstelle berührungsempfindlich und zusätzlich oder alternativ berührungsfrei erkennbar sein. Eine solche Ausführungsform bietet den Vorteil, dass als Benutzerschnittstelle je nach Anwendung und Anforderungen eine berührungsempfindliche Anzeigeeinrichtung und zusätzlich oder alternativ eine Einrichtung zur berührungsfreien Gestensteuerung genutzt werden kann, um zuverlässige und einfache Benutzereingaben zu ermöglichen.

Ferner ist im Schritt des Ausgebens das Anzeigesignal geeignet, um mittels der Benutzerschnittstelle eine Anzeige zumindest eines Bildsymbols zu bewirken, das durch Kneifen mit zwei Fingern und/oder Spreizen mit zwei Fingern als gestischer Wechselwirkung beeinflussbar ist. Eine solche Ausführungsform bietet den Vorteil, dass die Wechselwirkung mit dem zumindest einen Bildsymbol auf einfach verständliche und intuitive Weise erfolgen kann. Somit können Fehleingaben minimiert werden.

Auch kann im Schritt des Ausgebens das Anzeigesignal geeignet sein, in einer nicht beanspruchten Ausführungsform, um mittels der Benutzerschnittstelle eine Anzeige zumindest eines Bildsymbols zu bewirken, das durch die gestische Wechselwirkung skalierbar, auswählbar, verschiebbar, löschbar, kopierbar, drehbar und zusätzlich oder alternativ abwählbar ist. Eine solche Ausführungsform bietet den Vorteil, dass die Verkehrsüberwachung auf einfache, zeitsparende und fehlerresistente oder zumindest hinsichtlich Fehlern minimierte Weise eingerichtet werden kann.

Zudem kann im Schritt des Ausgebens das Anzeigesignal geeignet sein, in einer nicht beanspruchten Ausführungsform, um mittels der Benutzerschnittstelle eine Anzeige zumindest eines Bildsymbols zu bewirken, für das durch die gestische Wechselwirkung ein Kontextmenü, ein Auswahlmenü, ein Aufklappmenü, ein Tastatur-Steuerelement, ein Eingabefeld und zusätzlich oder alternativ zumindest ein anderes Steuerelement anzeigbar ist. Eine solche Ausführungsform bietet den Vorteil, dass eine effiziente, zeitsparende, umfangreiche und vielfältige Konfiguration des zumindest einen Parameters ermöglicht werden kann.

Überdies kann im Schritt des Ausgebens das Anzeigesignal geeignet sein, in einer nicht beanspruchten Ausführungsform, um mittels der Benutzerschnittstelle eine Anzeige zumindest eines Bildsymbols zu bewirken, das sich auf mindestens einen konfigurierbaren Infrastrukturparameter des Überwachungsortes der Verkehrsüberwachung bezieht. Hierbei kann der mindestens eine Infrastrukturparameter eine Anzahl von Fahrspuren, eine Ausrichtung mindestens einer Fahrspur, eine breite mindestens einer Fahrspur, eine Krümmung mindestens einer Fahrspur, eine Kreuzungsart, eine Position einer Lichtzeichenanlage, eine anhand von eingebbaren Positionsdaten des Überwachungsorts vorkonfigurierte Infrastruktur an dem Überwachungsort und zusätzlich oder alternativ zumindest einen weiteren Infrastrukturparameter repräsentieren. Eine solche Ausführungsform tritt den Vorteil, dass infrastrukturelle Gegebenheiten möglichst Realität getreu sowie auf einfache und verständliche Weise in die Einrichtung der Verkehrsüberwachung einbezogen werden können.

Auch kann im Schritt des Ausgebens das Anzeigesignal geeignet sein, in einer nicht beanspruchten Ausführungsform, um mittels der Benutzerschnittstelle eine Anzeige zumindest eines Bildsymbols zu bewirken, das sich auf mindestens einen konfigurierbaren Überwachungsparameter der Verkehrsüberwachung bezieht. Hierbei kann der mindestens eine Überwachungsparameter eine zulässige Höchstgeschwindigkeit, eine zulässige Mindestgeschwindigkeit, eine zulässige Fahrzeugeigenschaft, einen zulässigen Mindestabstand zwischen Fahrzeugen, eine zulässige Durchfahrtsberechtigung und zusätzlich oder alternativ zumindest einen weiteren Überwachungsparameter repräsentieren. Eine solche Ausführungsform bietet den Vorteil, dass bei der Einrichtung der Verkehrsüberwachung verschiedene Arten oder Zielsetzungen der Überwachung einfach und sicher eingestellt und konfiguriert werden können.

Ferner kann im Schritt des Ausgebens das Anzeigesignal geeignet sein, in einer nicht beanspruchten Ausführungsform, um mittels der Benutzerschnittstelle eine Anzeige zumindest eines Bildsymbols zu bewirken, das sich auf mindestens einen konfigurierbaren Geräteparameter zumindest eines Überwachungsgeräts der Verkehrsüberwachung bezieht. Hierbei kann der mindestens eine Geräteparameter eine Geräteart, eine Position des Überwachungsgeräts, eine Ausrichtung des Überwachungsgeräts, eine Überwachungsart und zusätzlich oder alternativ zumindest einen weiteren Geräteparameter repräsentieren. Eine solche Ausführungsform bietet den Vorteil, dass eine Aufstellung und Anordnung geeigneter Überwachungsmittel bzw. Messeinrichtungen für eine gewünschte Art der Verkehrsüberwachung auf korrekte und zuverlässige Weise unaufwändig konfiguriert werden kann.

Zudem ist im Schritt des Ausgebens das Anzeigesignal geeignet, um mittels der Benutzerschnittstelle eine Anzeige zumindest eines Bildsymbols zu bewirken, das sich auf mindestens einen konfigurierbaren Fahrzeugparameter bezieht. Hierbei ist der 2 mindestens eine Fahrzeugparameter eine Fahrzeugklasse. Eine solche Ausführungsform bietet den Vorteil, dass eine benutzerfreundliche Bündelung von Parametereinstellungen auf Fahrzeuge als Überwachungsobjekte erfolgen kann. Dabei können bei der Einrichtung der Verkehrsüberwachung mehrere Parameter fahrzeugbezogen und zusätzlich oder alternativ aus Fahrzeugperspektive konfiguriert werden.

Dabei ist kann die Fahrzeugklasse durch Kneifen mit zwei Fingern und zusätzlich oder alternativ durch Spreizen mit zwei Fingern als gestischer Wechselwirkung beeinflussbar.

Eine solche Ausführungsform bietet den Vorteil, dass besonders einfach und schnell ausgewählt werden kann, ob es sich bei dem Fahrzeug beispielsweise um ein Zweirad, einen Personenkraftwagen, einen Lastkraftwagen oder dergleichen handelt, denkbar auch mit einer feinen Abstufung.

Das Verfahren kann auch einen Schritt des Aktualisierens des Anzeigesignals ansprechend auf das Benutzereingabesignal und zusätzlich oder alternativ unter Verwendung des zumindest einen im Schritt des Konfigurierens konfigurierten Parameters aufweisen, um ein aktualisiertes Anzeigesignal zur Ausgabe an die Benutzerschnittstelle bereitzustellen. Eine solche Ausführungsform bietet den Vorteil, dass dem Benutzer eine Rückmeldung über eine vorgenommene Konfiguration gegeben werden kann. So kann die Übersichtsdarstellung aktuell gehalten werden.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird auch ein Verkehrsüberwachungssystem zum Durchführen einer Verkehrsüberwachung für einen Überwachungsort vorgestellt, wobei das Verkehrsüberwachungssystem folgende Merkmale aufweist:
eine Ausführungsform des vorstehend genannten Steuergeräts;
die Benutzerschnittstelle, wobei die Benutzerschnittstelle signalübertragungsfähig mit dem Steuergerät verbindbar oder verbunden ist; und
zumindest ein Überwachungsgerät, wobei das zumindest eine Überwachungsgerät an dem Überwachungsort anordenbar oder angeordnet ist, wobei das zumindest eine Überwachungsgerät signalübertragungsfähig mit dem Steuergerät verbindbar oder verbunden ist.

Hierbei kann die Benutzerschnittstelle als Teil des Steuergeräts ausgeführt sein. Das Steuergerät und zusätzlich oder alternativ die Benutzerschnittstelle kann oder können entfernt von dem Überwachungsort angeordnet sein oder werden. Das zumindest eine Überwachungsgerät kann mit dem Steuergerät und zusätzlich oder alternativ mit der Benutzerschnittstelle signalübertragungsfähig verbindbar oder verbunden sein, beispielsweise über Internet, Funk, Glasfaser oder dergleichen. Die Benutzerschnittstelle kann mit dem Steuergerät beispielsweise über Funk und zusätzlich oder alternativ elektrische oder optische Leitungen verbindbar oder verbunden sein.

Ein Ausführungsbeispiel der Erfindung ist in den Zeichnungen rein schematisch dargestellt und wird nachfolgend näher beschrieben. Es zeigt
Fig. 1 eine schematische Darstellung eines Verkehrsüberwachungssystems gemäß einem Ausführungsbeispiel;
Fig. 2 ein Ablaufdiagramm eines Verfahrens zum Einrichten gemäß einem Ausführungsbeispiel;
Fig. 3 eine schematische Darstellung einer mittels der Benutzerschnittstelle aus Fig. 1 anzeigbaren kombinierten Übersichtsdarstellung gemäß einem Ausführungsbeispiel;
Fig. 4 eine schematische Darstellung einer mittels der Benutzerschnittstelle aus Fig. 1 anzeigbaren kombinierten Übersichtsdarstellung gemäß einem Ausführungsbeispiel;
Fig. 5 eine schematische Darstellung einer mittels der Benutzerschnittstelle aus Fig. 1 anzeigbaren kombinierten Übersichtsdarstellung gemäß einem Ausführungsbeispiel;
Fig. 6 eine schematische Darstellung einer mittels der Benutzerschnittstelle aus Fig. 1 anzeigbaren kombinierten Übersichtsdarstellung gemäß einem Ausführungsbeispiel;
Fig. 7 die kombinierte Übersichtsdarstellung aus Fig. 6 bei einer Positionierung des Gerätesymbols;
Fig. 8 die kombinierte Übersichtsdarstellung aus Fig. 6 bzw. Fig. 7 bei einer Anpassung einer Ausrichtung des Gerätesymbols;
Fig. 9 eine schematische Darstellung einer mittels der Benutzerschnittstelle aus Fig. 1 anzeigbaren kombinierten Übersichtsdarstellung gemäß einem Ausführungsbeispiel;
Fig. 10 eine schematische Darstellung einer mittels der Benutzerschnittstelle aus Fig. 1 anzeigbaren kombinierten Übersichtsdarstellung gemäß einem Ausführungsbeispiel;
Fig. 11 die kombinierte Übersichtsdarstellung aus Fig. 10 mit positioniertem Benutzersymbol;
Fig. 12 die kombinierte Übersichtsdarstellung aus Fig. 5 bei einer gestischen Wechselwirkung mit einem Bildsymbol;
Fig. 13 die kombinierte Übersichtsdarstellung aus Fig. 12 ansprechend auf die gestische Wechselwirkung mit dem Bildsymbol;
Fig. 14 die kombinierte Übersichtsdarstellung aus Fig. 5 bei einer gestischen Wechselwirkung mit einem Bildsymbol;
Fig. 15 die kombinierte Übersichtsdarstellung aus Fig. 13 bei einer weiteren gestischen Wechselwirkung mit dem Bildsymbol;
Fig. 16 die kombinierte Übersichtsdarstellung aus Fig. 5 bei einer gestischen Wechselwirkung mit einem Bildsymbol;
Fig. 17 die kombinierte Übersichtsdarstellung aus Fig. 14 bei einer weiteren gestischen Wechselwirkung mit dem Bildsymbol;
Fig. 18 die kombinierte Übersichtsdarstellung aus Fig. 13 bzw. Fig. 15 bei einer weiteren gestischen Wechselwirkung mit dem Bildsymbol;
Fig. 19 die kombinierte Übersichtsdarstellung 112 aus Fig. 18 nach der gestischen Wechselwirkung mit dem Bildsymbol;
Fig. 20 die kombinierte Übersichtsdarstellung aus Fig. 13, Fig. 15 bzw. Fig. 18 bei einer weiteren gestischen Wechselwirkung mit dem Bildsymbol;
Fig. 21 die kombinierte Übersichtsdarstellung aus Fig. 20 nach der gestischen Wechselwirkung mit dem Bildsymbol;
Fig. 22 eine schematische Darstellung einer mittels der Benutzerschnittstelle aus Fig. 1 angezeigten kombinierten Übersichtsdarstellung bei einer gestischen Wechselwirkung mit einem Bildsymbol gemäß einem Ausführungsbeispiel;
Fig. 23 das Bildsymbol aus Fig. 22 bei einer gestischen Wechselwirkung; und
Fig. 24 das Bildsymbol aus Fig. 22 bzw. Fig. 23 der mittels der Benutzerschnittstelle angezeigten kombinierten Übersichtsdarstellung bei einer gestischen Wechselwirkung.

Bevor nachfolgend günstige Ausführungsbeispiele der Erfindung beschrieben werden, sollen zunächst Hintergründe, Grundlagen und Vorteile von Ausführungsbeispielen kurz erläutert werden.

Verkehrsüberwachungsanlagen werden üblicherweise über Parameterseiten und Eingabe von Werten in minimal-schematischen Szenendarstellungen eingerichtet bzw. funktionsorientiert konfiguriert. Bei der Konfiguration von solchen Verkehrsüberwachungsanlagen sind vielfältige Regeln, insbesondere Verkehrsregeln und Regeln zur gültigen bzw. beweissicheren Messung, zu berücksichtigen. Die Anzahl der Seiten und ihrer Parameter kann hoch sein. Es existieren Zusammenhänge bzw. Abhängigkeiten zwischen Parametern, die herkömmlicherweise schwierig oder nur unzureichend dargestellt werden oder werden können. Es gibt zwar vereinzelt schematische Darstellungen einer Straßenszene zur Eingabe einzelner geometrischer Parameter, eine Übersicht der gesamten Parameter einschließlich der Aufstellparameter und Einrichteparameter eines Verkehrsüberwachungssystems jedoch wird durch Ausführungsbeispiele der Erfindung bereitgestellt. Hierbei wird gemäß Ausführungsbeispielen Erfindung vorteilhafterweise getrennt zwischen Parametern, die den Messplatz bzw. Überwachungsort beschreiben, und solchen, die eine eigentliche Messsituation beschreiben. Eine Konfiguration erfolgt beispielsweise über eine berührungsempfindliche Anzeigeeinrichtung, wobei intuitive Eingabemöglichkeiten, die sich durch eine derartige gestische Eingabe ergeben, gemäß Ausführungsbeispielen ausgenutzt werden können. Eine effiziente und intuitive Bedienung kann hierbei über ein entsprechendes Bedienprogramm (HMI) ermöglicht werden.

Hierbei brauchen die Parameter nicht rein technisch benannt zu sein, beispielsweise Links/Rechts-Messung, und ein Einsatz fachlichen Wissens kann verringert werden. Aufgrund reduzierter Komplexität der Einrichtung kann eine hohe technische und fachliche Kompetenz des Anwenders ebenfalls verzichtbar sein. Es ergibt sich auch ein verlängertes Fehlerpotenzial beim Einrichteprozess durch eine geringere Wahrscheinlichkeit einer Falscheingabe, wie z. B. Vorzeichenfehler bei relativer Ausrichtung. Eine Wechselwirkung von Parametern, welche anders als herkömmlich nicht mehr über verschiedene Parameterseiten verteilt eingestellt werden, ist einfach und sicher erkennbar. Zusätzlich zu einer Fehleranfälligkeit kann auch eine Einrichtungszeit bzw. Konfigurationszeit reduziert werden. Eine Eingabe kann hierbei für einen Benutzer erwartungskonform erfolgen, insbesondere entsprechende einer komfortablen Bedienung im Alltag mithilfe von Tablets und Smartphones.

Es ergibt sich verglichen mit herkömmlichen Einrichtungsprozeduren eine Reduzierung der Komplexität des Einrichteprozesses und damit eine Fehlerminimierung, insbesondere durch schematische Darstellung bzw. Abbildung der Realität des Messplatzes bzw. Überwachungsortes, samt geografischer Gegebenheiten und geltender regulatorischer Vorschriften, und schematische Darstellung der aktuellen Messaufgabe an diesem Messplatz. Es kann eine klare Trennung der Ebene Messplatz mit geographischen bzw. örtlichen Gegebenheiten sowie geltenden Regularien von der Ebene Messsituation bzw. Messaufgabe mit Messziel und Messposition erreicht werden. Somit ist ein hohes Maß an Vorkonfiguration durch die klare Trennung zwischen Messplatz und Messsituation möglich und es kann eine zentrale Standortverwaltung realisiert werden, wodurch die Einrichtung fehlerminimiert und beschleunigt erfolgen kann. Es wird eine auf visuellen Gesichtspunkten basierende, schnelle, effiziente und fehlerminimierte Einrichtung des Messplatzes und der Messsituation bzw. Messaufgabe ermöglicht. Das Einrichten der Anlage bzw. des Verkehrsüberwachungssystems ist mit einem Minimum an Fachwissen bzw. Kenntnis der Fachterminologie möglich. Es können Fehler aufgrund von Missverständnissen vermieden werden. Ein Benutzer bzw. Bediener erlebt Schritt für Schritt, wie sich die auch als Scene-Map bezeichnete kombinierte Übersichtsdarstellung aufbaut und kann die an sich komplexe globale Scene-Map, die durch die Einrichtung letztlich erhalten wird, daher einfach verstehen und bedienen sowie Fehleingaben zuverlässig erkennen. Es ergibt sich auch ein einfaches Revidieren und Korrigieren von Eingaben mit sofortiger visueller Auswirkung bzw. Rückmeldung. Der Schulungsaufwand für die Einrichtung kann minimiert werden. Auch kann eine Maximierung bzw. Optimierung sogenannter In-Place-Konfigurationsmöglichkeiten in einer schematischen Scene-Map realisiert werden.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

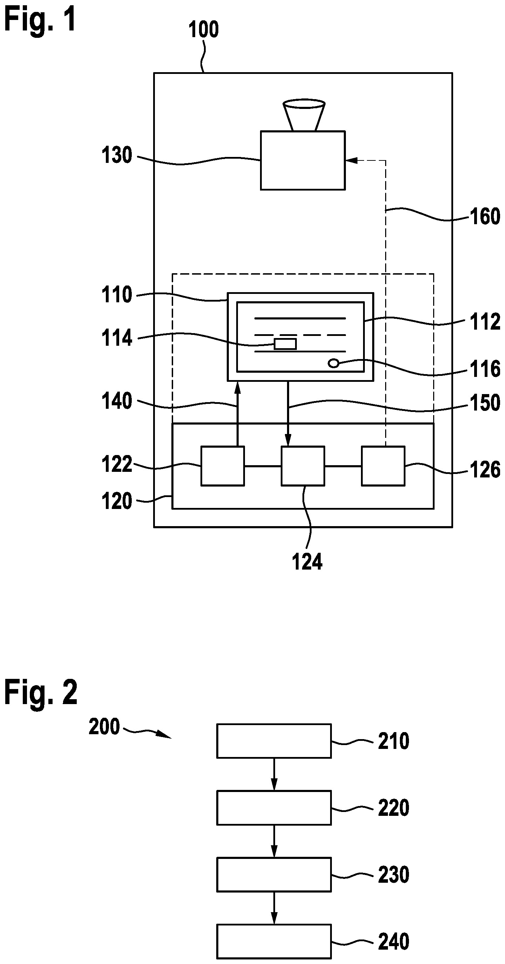

Fig. 1 zeigt eine schematische Darstellung eines Verkehrsüberwachungssystems 100 gemäß einem Ausführungsbeispiel. Das Verkehrsüberwachungssystem 100 ist ausgebildet, um eine Verkehrsüberwachung für einen Überwachungsort durchzuführen. Das Verkehrsüberwachungssystem 100 weist eine Benutzerschnittstelle 110, ein Steuergerät 120 und zumindest ein Überwachungsgerät 130 auf. In der Darstellung von Fig. 1 ist beispielhaft lediglich ein Überwachungsgerät 130 gezeigt.

Das zumindest eine Überwachungsgerät 130 ist an dem Überwachungsort angeordnet bzw. zur Anordnung an dem Überwachungsort vorgesehen. Das zumindest eine Überwachungsgerät 130 ist ausgebildet, um Messdaten zur Verkehrsüberwachung für den Überwachungsort zu erfassen bzw. aufzunehmen. Insbesondere ist das zumindest eine Überwachungsgerät 130 als ein optisches Überwachungsgerät ausgeführt. Dabei ist das zumindest ein Überwachungsgerät 130 signalübertragungsfähig mit dem Steuergerät 120 verbunden.

Die Benutzerschnittstelle 110 ist ausgebildet, um Eingaben eines Benutzers zum Einrichten der Verkehrsüberwachung für den Überwachungsort zu empfangen. Die Benutzerschnittstelle 110 ist ausgebildet, um in einer kombinierten Übersichtsdarstellung 112 für den Überwachungsort zumindest ein Bildsymbol 114, 116 anzuzeigen. Das zumindest eine Bildsymbol 114, 116 bezieht sich dabei auf mindestens einen konfigurierbaren Parameter der Verkehrsüberwachung. Das zumindest eine Bildsymbol 114, 116 ist durch eine gestische Wechselwirkung zwischen Bildsymbol 114, 116 und dem Benutzer beeinflussbar, um den mindestens einen konfigurierbaren Parameter zu konfigurieren. Insbesondere ist die Benutzerschnittstelle 110 ausgebildet, um eine berührungsempfindliche und/oder berührungsfreie Gestenerkennung von durch den Benutzer ausgeführten Eingabegesten durchzuführen. Die Benutzerschnittstelle 110 und das Steuergerät 120 sind signalübertragungsfähig miteinander verbunden.

Das Steuergerät 120 ist eingerichtet, um Schritte eines Verfahrens zum Einrichten der Verkehrsüberwachung für den Überwachungsort in entsprechenden Einheiten auszuführen und/oder anzusteuern. Insbesondere ist das Steuergerät 120 eingerichtet, um die Schritte eines nachstehend unter Bezugnahme auf Fig. 2 dargestellten Verfahrens oder eines ähnlichen Verfahrens auszuführen und/oder anzusteuern. Optional kann die Benutzerschnittstelle 110 als Teil des Steuergeräts 120 ausgeführt sein oder können die Benutzerschnittstelle 110 und das Steuergerät 120 Teil einer gemeinsamen Vorrichtung sein.

Das Steuergerät 120 weist eine Ausgabeeinrichtung 122, eine Einleseeinrichtung 124 und eine Konfigurationseinrichtung 126 auf. Die Ausgabeeinrichtung 122 ist ausgebildet, um ein Anzeigesignal 140 an die Benutzerschnittstelle 110 auszugeben. Das Anzeigesignal 140, dass mittels der Ausgabeeinrichtung 122 ausgebbar ist bzw. ausgegeben wird, ist geeignet, um mittels der Benutzerschnittstelle 110 die Anzeige des zumindest einen Bildsymbol des 114, 116 in der kombinierten Übersichtsdarstellung 112 für den Überwachungsort zu bewirken. Die Einleseeinrichtung 124 ist ausgebildet, um ein Benutzereingabesignal 150 von der Benutzerschnittstelle 110 einzulesen. Das Benutzereingabesignal 150 repräsentiert eine durch die gestische Wechselwirkung mit dem zumindest einen Bildsymbol 114, 116 vorgenommene und durch Gestenerkennung erkannte Eingabe eines Benutzers zum Konfigurieren des mindestens einen Parameters, auf den sich das zumindest eine Bildsymbol 114,116 bezieht. Die Konfigurationseinrichtung 126 ist ausgebildet, um abhängig von dem Benutzereingabesignal 150 den zumindest einen konfigurierbaren Parameter zu konfigurieren, um die Verkehrsüberwachung für den Überwachungsort einzurichten.

Gemäß einem Ausführungsbeispiel ist das Steuergerät 120 auch ausgebildet, um ansprechend auf das Benutzereingabesignal 150 und/oder unter Verwendung des zumindest einen konfigurierten Parameters das Anzeigesignal 140 zu aktualisieren, um ein aktualisiertes Anzeigesignal 140 zur Ausgabe an die Benutzerschnittstelle 110 bereitzustellen. Gemäß einem Ausführungsbeispiel ist das Steuergerät 120 zudem ausgebildet, um ein Konfigurationssignal 160 zur Ausgabe an das zumindest eine Überwachungsgerät 130 bereitzustellen. Das Konfigurationssignal 160 repräsentiert den zumindest einen konfigurierten Parameter bzw. die eingerichtete Verkehrsüberwachung mit dem zumindest einen konfigurierten Parameter.

Das Steuergerät 120, insbesondere die Ausgabeeinrichtung 122, ist ausgebildet, um als das Anzeigesignal 140 ein Signal auszugeben, das geeignet ist, um mittels der Benutzerschnittstelle 110 eine Anzeige zumindest eines Bildsymbols 114, 116 zu bewirken, das
- durch Kneifen mit zwei Fingern, Spreizen mit zwei Fingern, Ziehen und Ablegen, Antippen und/oder Wischen als gestischer Wechselwirkung beeinflussbar ist,
- das durch die gestische Wechselwirkung skalierbar, auswählbar, verschiebbar, löschbar, kopierbar, drehbar und/oder abwählbar ist,
- für das durch die gestische Wechselwirkung ein Kontextmenü, ein Auswahlmenü, ein Aufklappmenü, ein Tastatur-Steuerelement, ein Eingabefeld und/oder zumindest ein anderes Steuerelement anzeigbar ist,
- das sich auf mindestens einen konfigurierbaren Infrastrukturparameter des Überwachungsortes der Verkehrsüberwachung bezieht, wobei der mindestens eine Infrastrukturparameter eine Anzahl von Fahrspuren, eine Ausrichtung mindestens einer Fahrspur, eine breite mindestens einer Fahrspur, eine Krümmung mindestens einer Fahrspur, eine Kreuzungsart, eine Position einer Lichtzeichenanlage, eine anhand von eingebbaren Positionsdaten des Überwachungsorts vorkonfigurierte Infrastruktur an dem Überwachungsort und/oder zumindest einen weiteren Infrastrukturparameter repräsentiert,
- das sich auf mindestens einen konfigurierbaren Überwachungsparameter der Verkehrsüberwachung bezieht, wobei der mindestens eine Überwachungsparameter eine zulässige Höchstgeschwindigkeit, eine zulässige Mindestgeschwindigkeit, eine zulässige Fahrzeugeigenschaft, einen zulässigen Mindestabstand zwischen Fahrzeugen, eine zulässige Durchfahrtsberechtigung und/oder zumindest einen weiteren Überwachungsparameter repräsentiert,
- das sich auf mindestens einen konfigurierbaren Geräteparameter zumindest eines Überwachungsgeräts der Verkehrsüberwachung bezieht, wobei der mindestens eine Geräteparameter eine Geräteart, eine Position des Überwachungsgeräts, eine Ausrichtung des Überwachungsgeräts, eine Überwachungsart und/oder zumindest einen weiteren Geräteparameter repräsentiert, und/oder
- das sich auf mindestens einen konfigurierbaren Fahrzeugparameter bezieht, wobei der mindestens eine Fahrzeugparameter eine Fahrzeugklasse, eine Fahrzeugabmessung, eine zulässige Höchstgeschwindigkeit für das Fahrzeug an dem Überwachungsort, eine zulässige Mindestgeschwindigkeit für das Fahrzeug an dem Überwachungsort, eine Position des Fahrzeugs bezüglich Fahrspuren an dem Überwachungsort, eine Ausrichtung des Fahrzeugs bezüglich Fahrspuren an dem Überwachungsort und/oder zumindest einen weiteren Fahrzeugparameter repräsentiert.

Optional ist dabei die Fahrzeugklasse durch Kneifen mit zwei Fingern und/oder Spreizen mit zwei Fingern als gestischer Wechselwirkung beeinflussbar.

Die Benutzerschnittstelle 110 ist hierbei ausgebildet, um unter Verwendung eines solchen Anzeigesignals 140 die kombinierten Übersichtsdarstellung 112 mit dem zumindest einen Bildsymbol 114, 116 zu erzeugen. Die Bildsymbole 114, 116 können beispielsweise als sogenannte Buttons ausgeführt sein. Ferner ist die Benutzerschnittstelle 110 ausgebildet, um ansprechend auf die gestische Wechselwirkung mit dem zumindest einen Bildsymbol 114, 116 das Benutzereingabesignal 150 zu erzeugen und zur Ausgabe an das Steuergerät 120 bereitzustellen.

Fig. 2 zeigt ein Ablaufdiagramm eines Verfahrens 200 zum Einrichten gemäß einem Ausführungsbeispiel. Das Verfahren 200 zum Einrichten ist ausführbar, um eine Verkehrsüberwachung für einen Überwachungsort einzurichten bzw. eine Parametrisierung zum Einrichten einer Verkehrsüberwachung für einen Überwachungsort durchzuführen. Dabei ist das Verfahren 200 zum Einrichten unter Verwendung des Steuergeräts aus Fig. 1 oder eines ähnlichen Steuergeräts ausführbar. Auch ist das Verfahren 200 zum Einrichten in Verbindung mit dem Verkehrsüberwachungssystem aus Fig. 1 oder einem ähnlichen Verkehrsüberwachungssystem ausführbar. Das Verfahren 200 zum Einrichten weist einen Schritt 210 des Ausgebens, einen Schritt 220 des Einlesens und einen Schritt 230 des Konfigurierens auf.

Im Schritt 210 des Ausgebens wird ein Anzeigesignal an eine Benutzerschnittstelle ausgegeben. Das Anzeigesignal ist geeignet, um mittels der Benutzerschnittstelle eine Anzeige zumindest eines Bildsymbols in einer kombinierten Übersichtsdarstellung für den Überwachungsort zu bewirken, das sich auf mindestens einen konfigurierbaren Parameter der Verkehrsüberwachung bezieht. Das zumindest eine Bildsymbol durch eine gestische Wechselwirkung mit einem Benutzer ist beeinflussbar, um den mindestens einen konfigurierbaren Parameter zu konfigurieren. Im Schritt 220 des Einlesens wird ein Benutzereingabesignal von der Benutzerschnittstelle eingelesen. Das Benutzereingabesignal repräsentiert eine durch die gestische Wechselwirkung mit dem zumindest einen Bildsymbol vorgenommene und durch Gestenerkennung erkannte Eingabe eines Benutzers zum Konfigurieren des mindestens einen Parameters. Im Schritt 230 des Konfigurierens wird abhängig von dem Benutzereingabesignal der zumindest eine konfigurierbaren Parameter konfiguriert, um die Verkehrsüberwachung einzurichten.

Gemäß einem Ausführungsbeispiel weist das Verfahren 200 zum Einrichten auch einen Schritt 240 des Aktualisierens des Anzeigesignals ansprechend auf das Benutzereingabesignal und/oder unter Verwendung des zumindest einen im Schritt des Konfigurierens konfigurierten Parameters auf, um ein aktualisiertes Anzeigesignal zur Ausgabe an die Benutzerschnittstelle bereitzustellen. Dabei ist der Schritt 240 des Aktualisierens nach dem Schritt 220 des Einlesens oder nach dem Schritt 230 des Konfigurierens ausführbar.

Gemäß einem Ausführungsbeispiel sind bei dem Verfahren 200 zum Einrichten der Schritt 210 des Ausgebens, der Schritt 220 des Einlesens und der Schritt 230 des Konfigurierens zyklisch wiederholt ausführbar. Optional sind bei dem Verfahren 200 zum Einrichten der Schritt 210 des Ausgebens, der Schritt 220 des Einlesens, der Schritt 230 des Konfigurierens und der Schritt 240 des Aktualisierens zyklisch wiederholt ausführbar.

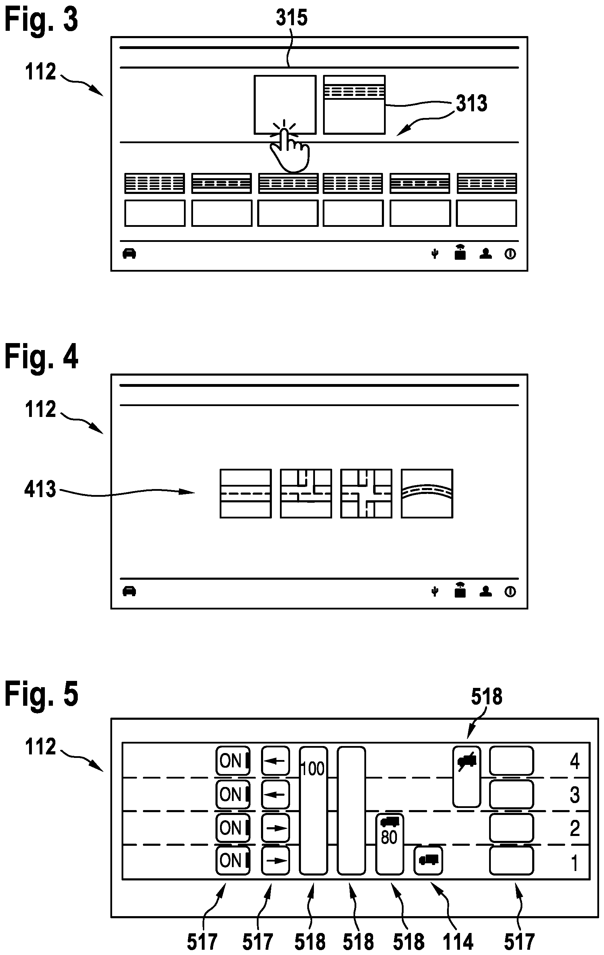

Fig. 3 zeigt eine schematische Darstellung einer mittels der Benutzerschnittstelle aus Fig. 1 anzeigbaren kombinierten Übersichtsdarstellung 112 gemäß einem Ausführungsbeispiel. Die kombinierte Übersichtsdarstellung 112 in Fig. 3 bezieht sich hierbei auf ein Hinzufügen eines neuen Überwachungsortes. Als Bildsymbole sind in der kombinierten Übersichtsdarstellung 112 hierbei mehrere verfügbare nahe gelegene Überwachungsorte 313 sowie ein Hinzufügungssymbol 315 zum Hinzufügen eines neuen Überwachungsortes angezeigt. Eine gestische Wechselwirkung zwischen einem Benutzer und dem Hinzufügungssymbol 315 ist symbolisch durch Antippen des Hinzufügung Symbols 315 mit einem Finger veranschaulicht.

Fig. 4 zeigt eine schematische Darstellung einer mittels der Benutzerschnittstelle aus Fig. 1 anzeigbaren kombinierten Übersichtsdarstellung 112 gemäß einem Ausführungsbeispiel. Die kombinierte Übersichtsdarstellung 112 in Fig. 4 ist bezüglich der kombinierten Übersichtsdarstellung aus Fig. 3 nachfolgend anzeigbar und bezieht sich auf eine Auswahl eines Infrastrukturtyps, Straßentyps, Kreuzungstyps oder dergleichen für den neu hinzugefügten Überwachungsort. Hierzu sind in der kombinierten Übersichtsdarstellung 112 als Bildsymbole mehrere Typsymbole 413 angezeigt.

Fig. 5 zeigt eine schematische Darstellung einer mittels der Benutzerschnittstelle aus Fig. 1 anzeigbaren kombinierten Übersichtsdarstellung 112 gemäß einem Ausführungsbeispiel. Die in Fig. 5 gezeigte kombinierte Übersichtsdarstellung 112 ergibt sich hierbei nachfolgend bezüglich einer Auswahl des Infrastrukturtyps, Straßentyps, Kreuzungstyps oder dergleichen aus Fig. 4. Die in Fig. 5 gezeigte kombinierte Übersichtsdarstellung 112 stellt eine sogenannte Scene-Map bzw. Szenenabbildung des Überwachungsorts dar. Hierbei sind in der kombinierten Übersichtsdarstellung 112 mehrere Fahrspuren sowie eine Mehrzahl von Bildsymbolen in Gestalt eines Fahrzeugsymbols 114, in Gestalt von Infrastruktursymbolen 517 hinsichtlich Fahrtrichtung, Fahrspurbreite und dergleichen sowie in Gestalt von Überwachungssymbolen 518 hinsichtlich zu überwachender gültiger Regularien angezeigt. In der kombinierten Übersichtsdarstellung 112 sind einzelne Regeln, Funktionen etc. mittels der als Buttons ausgeführten Bildsymbole dargestellt.

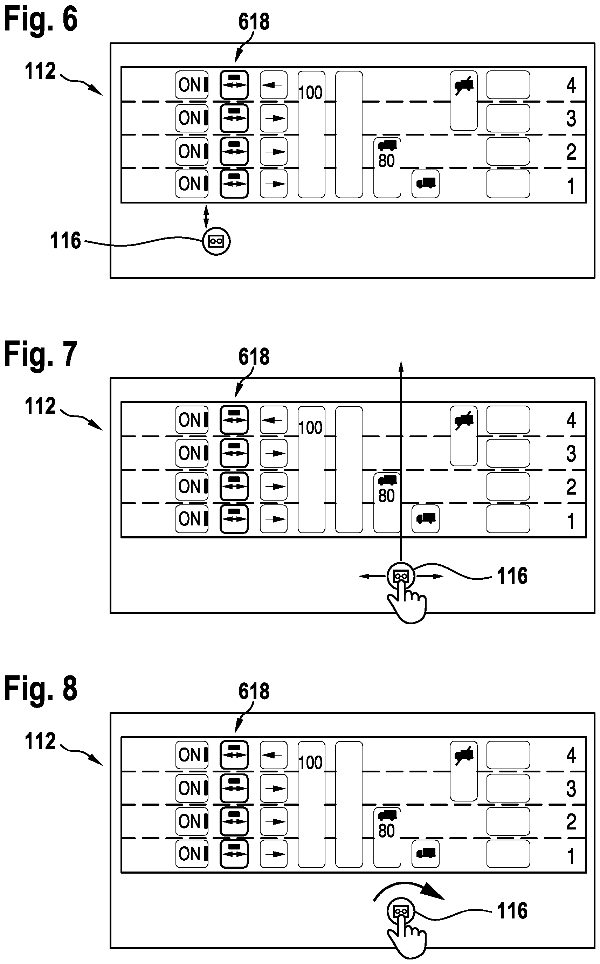

Fig. 6 zeigt eine schematische Darstellung einer mittels der Benutzerschnittstelle aus Fig. 1 anzeigbaren kombinierten Übersichtsdarstellung 112 gemäß einem Ausführungsbeispiel. Die in Fig. 6 gezeigte kombinierte Übersichtsdarstellung 112 entspricht oder ähnelt der kombinierten Übersichtsdarstellung aus Fig. 5, wobei als Bildsymbole zusätzlich ein Gerätesymbol 116 und weitere Überwachungssymbole 618 angezeigt sind. Das Gerätesymbol 116 repräsentiert hierbei ein Überwachungsgerät wie das Überwachungsgerät aus Fig. 1. Die weiteren Überwachungssymbole 618 repräsentieren Messrichtungen bzw. überwachte Fahrtrichtungen für die Fahrspuren.

Fig. 7 zeigt die kombinierte Übersichtsdarstellung 112 aus Fig. 6 bei einer Positionierung des Gerätesymbols 116. Das Gerätesymbol 116 ist mittels der gestischen Wechselwirkung durch Ziehen mit einem Finger in verschiedene Richtungen an dem Überwachungsort positionierbar.

Fig. 8 zeigt die kombinierte Übersichtsdarstellung 112 aus Fig. 6 bzw. Fig. 7 bei einer Anpassung einer Ausrichtung des Gerätesymbols 116. Hierzu ist das Gerätesymbol 116 mittels der gestischen Wechselwirkung durch Ausführen zumindest eines Teils einer Kreisbewegung mit einem Finger in verschiedene Messrichtungen ausrichtbar. Wird eine Ausrichtung durch ziehen des Messstrahls geändert, ändern sich automatisch sowohl die Messrichtung für betreffende Fahrstreifen bzw. Fahrspuren zwischen ankommend und abfließend als auch eine Überholüberwachung sowie ein Messtyp zwischen Linksmessung und Rechtsmessung.

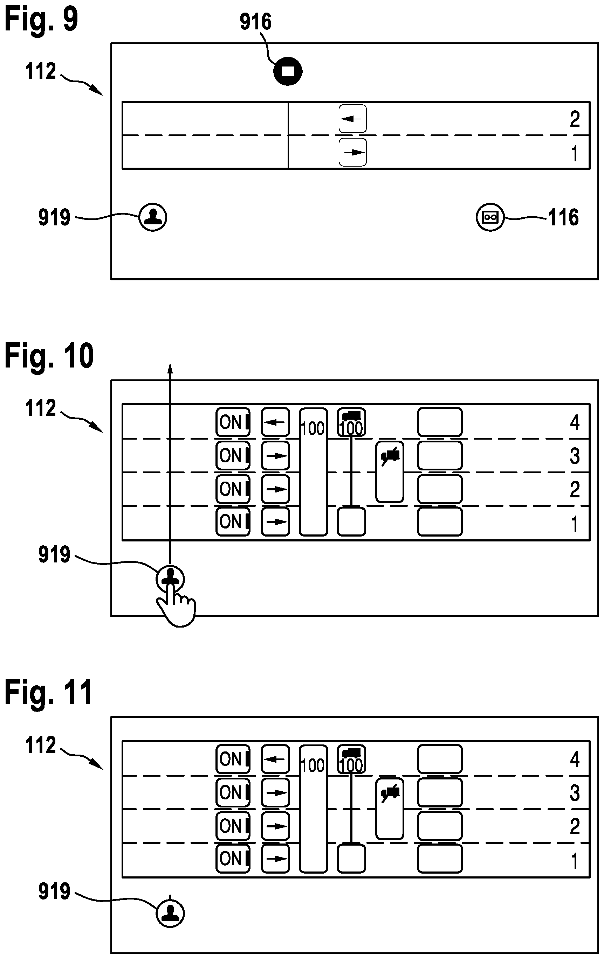

Fig. 9 zeigt eine schematische Darstellung einer mittels der Benutzerschnittstelle aus Fig. 1 anzeigbaren kombinierten Übersichtsdarstellung 112 gemäß einem Ausführungsbeispiel. Die in Fig. 9 gezeigte kombinierte Übersichtsdarstellung 112 entspricht oder ähnelt der kombinierten Übersichtsdarstellung aus einer der Figuren 6 bis 9, wobei als Bildsymbole zusätzlich zu dem Gerätesymbol 116 ein weiteres Gerätesymbol 916 und ein Benutzersymbol 919 angezeigt sind. Das weitere Gerätesymbol 916 repräsentiert ein weiteres Überwachungsgerät, beispielsweise eine Zusatzkomponente oder ein sogenanntes Remote-System. Eine Blickrichtung des weiteren Überwachungsgeräts, dass durch das weitere Gerätesymbol 916 repräsentiert ist, kann hierbei von einer Blickrichtung des Überwachungsgeräts, das durch das Gerätesymbol 116 repräsentiert ist, abgewandt sein. Gemäß der Darstellung in Fig. 9 sind das Geräte Symbol 116 und das weitere Gerätesymbol 916 auf unterschiedlichen Straßenseiten positioniert. Das Benutzersymbol 919 repräsentiert eine Position eines Benutzers oder Anwenders. Das Benutzersymbol 919 und das Gerätesymbol 116 sind auf der gleichen Straßenseite positioniert.

Fig. 10 zeigt eine schematische Darstellung einer mittels der Benutzerschnittstelle aus Fig. 1 anzeigbaren kombinierten Übersichtsdarstellung 112 gemäß einem Ausführungsbeispiel. Die in Fig. 10 gezeigte kombinierte Übersichtsdarstellung 112 entspricht oder ähnelt der kombinierten Übersichtsdarstellung aus einer der Figuren 5 bis 8, wobei als Bildsymbol zusätzlich ein Benutzersymbol 919 angezeigt ist. Das Benutzersymbol 919 repräsentiert eine Position eines Benutzers oder Anwenders. Hierbei entspricht oder ähnelt das Benutzersymbol 919 dem Benutzersymbol aus Fig. 9. Das Benutzersymbol 919 ist mittels einer gestischen Wechselwirkung durch Ziehen mit einem Finger in der Übersichtsdarstellung 112 entsprechend einer tatsächlichen Position eines Benutzers an dem Überwachungsort positionierbar. Eine Darstellung der kombinierten Übersichtsdarstellung 112 erfolgt dann immer aus Sicht bzw. Blickrichtung des Anwenders bzw. Benutzers.

Fig. 11 zeigt die kombinierte Übersichtsdarstellung 112 aus Fig. 10 mit positioniertem Benutzersymbol. Somit ist die kombinierte Übersichtsdarstellung 112 aus Sicht bzw. Blickrichtung des Anwenders bzw. Benutzers angezeigt.

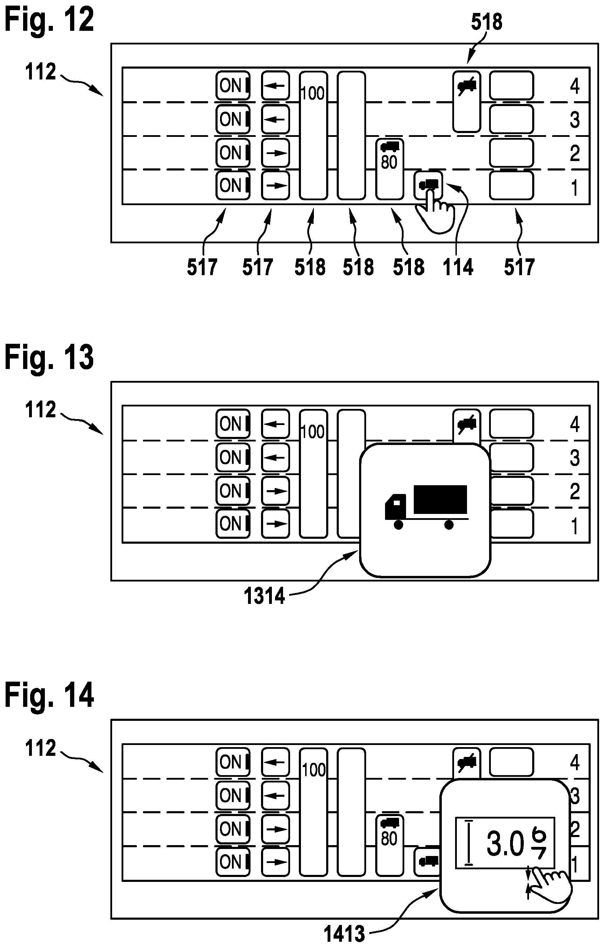

Fig. 12 zeigt die kombinierte Übersichtsdarstellung 112 aus Fig. 5 bei einer gestischen Wechselwirkung mit einem Bildsymbol, genauer gesagt mit dem Fahrzeugsymbol 114. Die Verkehrssituation bzw. Messsituation ist in der kombinierten Übersichtsdarstellung 112 bzw. in der sogenannten Scene-Map schematisch dargestellt.

Einzelne Regeln, Funktionen etc. werden dabei durch als Buttons ausgeführte Bildsymbole 517 und 518 dargestellt. Aufgrund einer potenziell hohen Anzahl an Regeln, Funktionen etc. und eines beschränkten Anzeigeplatzes sind diese Buttons in ihrer Gesamtheit in der Größe lediglich für Lesbarkeit optimiert. Um eine zeitgemä-ße, intuitive, effiziente Bedienung beispielsweise durch Touch-Gesten zu ermöglichen, können die einzelnen Buttons interaktiv genutzt werden. Die Gestensteuerung wird durch initiales Tippen oder Drücken (*Press*) auf einen Button, hier dem Fahrzeugsymbol 114, in der kombinierten Übersichtsdarstellung 112 aktiviert.

Fig. 13 zeigt die kombinierte Übersichtsdarstellung 112 aus Fig. 12 ansprechend auf die gestische Wechselwirkung mit dem Bildsymbol, hier dem Fahrzeugsymbol. Die gestische Wechselwirkung mit dem Fahrzeugsymbol bewirkt hierbei eine grafische bzw. visuelle Vergrößerung des Fahrzeugsymbols bzw. eine Anzeige eines grafisch vergrößerten Fahrzeugsymbols 1314, um eine ausreichend große Fläche für eine weitere gestische Wechselwirkung bereitzustellen. Anders ausgedrückt führt das Tippen oder Drücken (*Press*) zu einer visuellen Vergrößerung des Buttons, um eine hinreichend große Fläche für eine weitere Gestensteuerung zu ermöglichen. Eine jeweils auf den vergrößerten Button anzuwendende oder anwendbare Geste wird dabei in der visuell hervorgehobenen Eingabefläche als Eingabehilfe symbolisch visualisiert.

Fig. 14 zeigt die kombinierte Übersichtsdarstellung 112 aus Fig. 5 bei einer gestischen Wechselwirkung mit einem Bildsymbol, hier einem Spurbreitesymbol 1413. In Fig. 14 ist das Spurbreitesymbol 1413 in einer vergrößerten Darstellung nach einem initialen Tippen oder Drücken auf das Spurbreitesymbol bzw. ein Spursymbol gezeigt. Die Spurbreite kann durch vertikales Kneifen und Spreizen (*Vertical Stretch & Pinch*) mit zwei Fingern verändert werden.

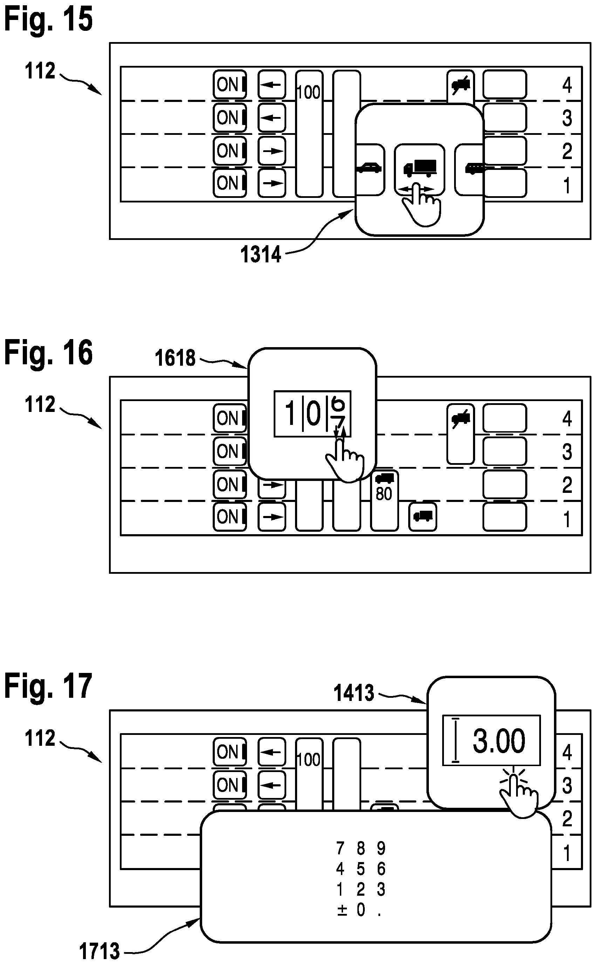

Fig. 15 zeigt die kombinierte Übersichtsdarstellung 112 aus Fig. 13 bei einer weiteren gestischen Wechselwirkung mit dem Bildsymbol, hier dem vergrößerten Fahrzeugsymbol 1314. Hierbei kann mittels der weiteren gestischen Wechselwirkung durch Wischen nach links/rechts (*Flick Left/Right*) eine Fahrzeugklasse verändert und ausgewählt werden.

Fig. 16 zeigt die kombinierte Übersichtsdarstellung 112 aus Fig. 5 bei einer gestischen Wechselwirkung mit einem Bildsymbol, hier einem Überwachungssymbol. In

Fig. 16 ist das Überwachungssymbol in einer vergrößerten Darstellung bzw. als vergrößertes Überwachungssymbol 1618 nach einem initialen Tippen oder Drücken auf das Überwachungssymbol gezeigt. Hierbei kann mittels der gestischen Wechselwirkung durch Wischen nach oben und unten (*Flick Up & Flick Down*) ein Geschwindigkeitslimit bzw. eine Maximalgeschwindigkeit oder Minimalgeschwindigkeit verändert werden.

Fig. 17 zeigt die kombinierte Übersichtsdarstellung 112 aus Fig. 14 bei einer weiteren gestischen Wechselwirkung mit dem Bildsymbol, genauer gesagt dem vergrößert dargestellten Spurbreitesymbol 1413. Hierbei ist mittels der gestischen Wechselwirkung durch ein Tippen (*Tap*) in die vergrößerte Fläche eine Bildschirmtastatur bzw. ein Tastatur-Steuerelement 1713 zur genauen Werteingabe bei Zahlenfeldern, z. B. Geschwindigkeitslimit oder Spurbreite, anzeigbar.

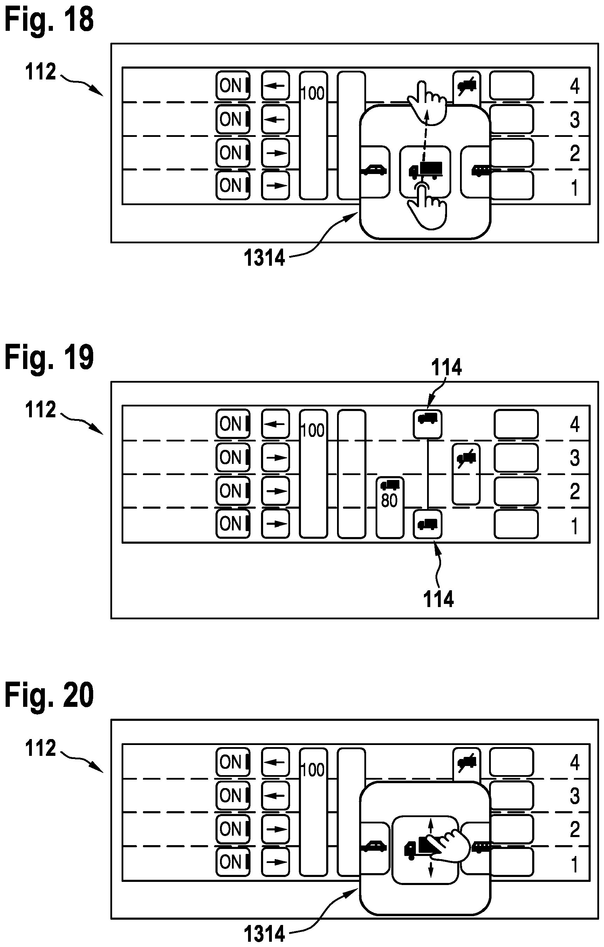

Fig. 18 zeigt die kombinierte Übersichtsdarstellung 112 aus Fig. 13 bzw. Fig. 15 bei einer weiteren gestischen Wechselwirkung mit dem Bildsymbol, hier dem vergrößerten Fahrzeugsymbol 1314. Mittels der gestischen Wechselwirkung durch Ziehen eines Bildsymbols, hier des vergrößerten Fahrzeugsymbols 1314, auf einen gewünschten Fahrstreifen können bereits erstellte Regeln bzw. konfigurierte Parameter auf andere Fahrstreifen bzw. Bereiche kopiert werden.

Fig. 19 zeigt die kombinierte Übersichtsdarstellung 112 aus Fig. 18 nach der gestischen Wechselwirkung mit dem Bildsymbol. Hierbei ist das Fahrzeugsymbol 114 durch die gestische Wechselwirkung aus Fig. 12 und Fig. 18 von einer ersten Fahrspur auf eine weitere Fahrspur kopiert.

Fig. 20 zeigt die kombinierte Übersichtsdarstellung 112 aus Fig. 13, Fig. 15 bzw. Fig. 18 bei einer weiteren gestischen Wechselwirkung mit dem Bildsymbol, hier dem vergrößerten Fahrzeugsymbol 1314. Mittels der gestischen Wechselwirkung durch Spreizen eines Bildsymbols, hier des vergrößerten Fahrzeugsymbols 1314, können Regeln bzw. konfigurierte Parameter auf alle Fahrstreifen bzw. Fahrspuren erweitert werden.

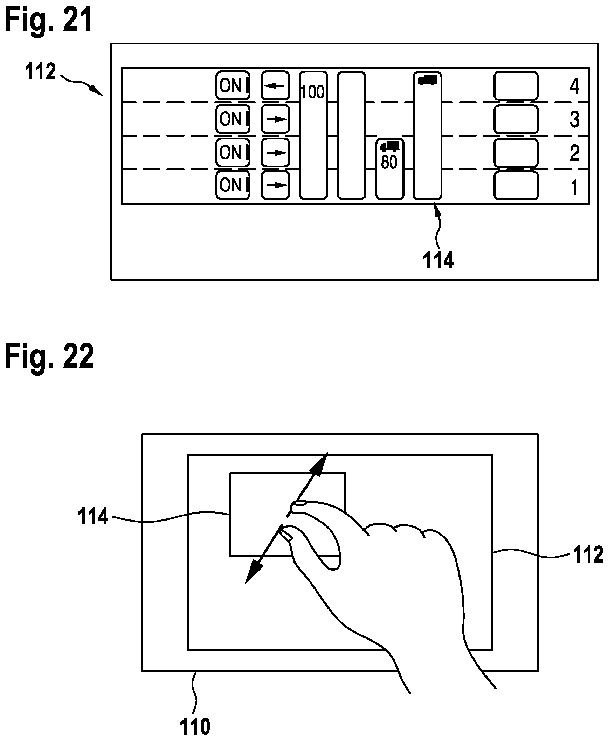

Fig. 21 zeigt die kombinierte Übersichtsdarstellung 112 aus Fig. 20 nach der gestischen Wechselwirkung mit dem Bildsymbol. Hierbei ist das Fahrzeugsymbol 114 durch die gestische Wechselwirkung aus Fig. 12 und Fig. 20 auf Fahrspuren erweitert.

Unter Bezugnahme auf die vorstehend beschriebenen Figuren 12 bis 21 sei noch angemerkt, dass eine Aktivierung und Deaktivierung von Funktionen, beispielsweise einer Überwachung einer Fahrspur bzw. eines Fahrstreifens, über ein Tippen auf ein entsprechendes Bildsymbol durchgeführt werden kann. Ein weiterer konfigurierbarer Parameter kann eine Toleranz bei einer Rotlicht-Überwachung sein, der mittels einer gestischen Wechselwirkung durch Wischen nach oben und unten verändert werden kann. Bei Wisch-Gesten (*Flick*-Gesten) wirkt sich eine Geschwindigkeit der gestischen Wechselwirkung auf eine Einstellungsgenauigkeit bzw. Geschwindigkeit aus. Bei groben Einstellungen durch schnelle Bewegungen werden numerische Werte in sinnvollen Intervallen gerastert, z. B. Geschwindigkeiten in 10km/h-Schritten etc. Die Gestensteuerung bzw. gestische Wechselwirkung für ein Bildsymbol wird durch Tippen (*Tap*) auf eine freie Fläche abseits von dem Bildsymbol beendet. Eine Möglichkeit zum Löschen von Regeln kann durch eine zusätzliche Anzeige eines Papierkorbsymbols geboten werden, während ein Bildsymbol aktiviert ist.

Fig. 22 zeigt eine schematische Darstellung einer mittels der Benutzerschnittstelle 110 aus Fig. 1 anzeigbaren kombinierten Übersichtsdarstellung 112 bei einer gestischen Wechselwirkung mit einem Bildsymbol gemäß einer erfindungsgemäßen Ausführungsform.

Gezeigt ist als Bildsymbol ein Fahrzeugsymbol 114. Mittels der gestischen Wechselwirkung kann durch Kneifen und Spreizen mit zwei Fingern eine Fahrzeugklasse ausgewählt werden. Das Fahrzeugsymbol 114 kann standardmäßig einen Personenkraftwagen repräsentieren, wobei durch Kneifen eine kleinere Fahrzeugklasse ausgewählt werden kann, zum Beispiel Motorrad, Fahrrad oder dergleichen, und durch Spreizen eine größere Fahrzeugklasse ausgewählt werden kann, zum Beispiel ein Lastkraftwagen. Es ergibt sich hierbei eine intuitive Gestenrichtung.

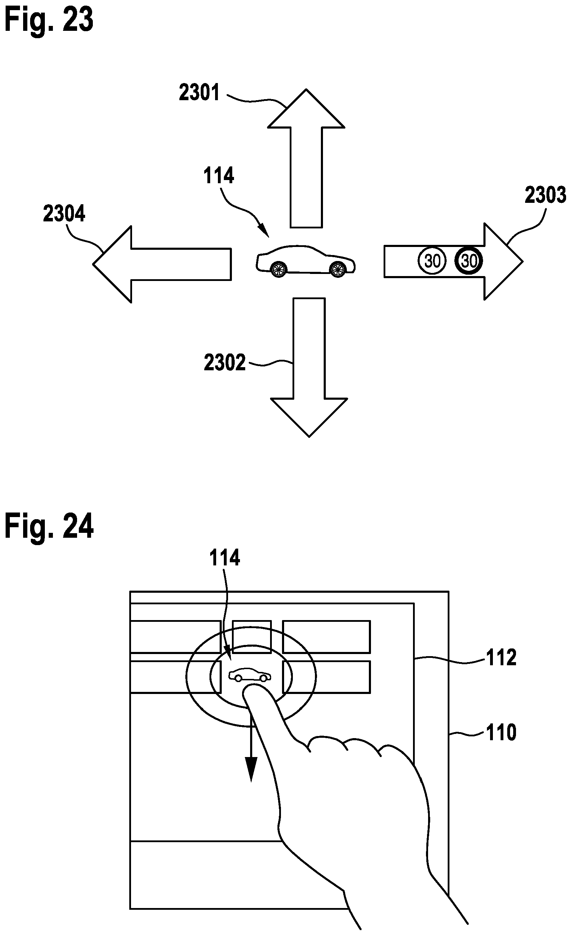

Fig. 23 zeigt das Bildsymbol, hier das Fahrzeugsymbol 114, aus Fig. 22 bei einer gestischen Wechselwirkung. Beispielsweise kann bei der gestischen Wechselwirkung das Fahrzeugsymbol 114 doppelt angetippt bzw. angeklickt werden. Diese gestische Wechselwirkung bewirkt, dass sich ein Fenster für Eigenschaften öffnet, oder das konfigurierte Fahrzeug "geparkt" wird und ein neues Fahrzeug bzw. Fahrzeugsymbol mit den gleichen oder mit unterschiedlichen Eigenschaften erzeugt wird. Das Fenster für Eigenschaften weist Steuerungshinweise 2301, 2302, 2303 und 2304 auf. Ein erster Steuerungshinweis 2301 repräsentiert ein Wischen nach oben zum Kopieren von Fahrspuren bzw. auf Fahrspuren. Ein zweiter Steuerungshinweis 2302 repräsentiert ein Wischen nach unten zum Löschen von Fahrspuren. Ein dritter Steuerungshinweis 2303 repräsentiert ein Wischen nach rechts zur Eingabe von Geschwindigkeitslimits. Ein vierter Steuerungshinweis 2304 repräsentiert ein Wischen nach links zum Drehen einer Fahrtrichtung.

Fig. 24 zeigt das Bildsymbol aus Fig. 22 bzw. Fig. 23, hier das Fahrzeugsymbol 114, der mittels der Benutzerschnittstelle 110 angezeigten kombinierten Übersichtsdarstellung 112 bei einer gestischen Wechselwirkung. Mittels der gestischen Wechselwirkung kann das Fahrzeugsymbol 114 durch Ziehen in einen anderen Bereich der kombinierten Übersichtsdarstellung 112 kopiert und/oder gelöscht werden.

Unter Bezugnahme auf die vorstehend beschriebenen Figuren, insbesondere die Figuren 3 bis 11, wird nachfolgend eine Einrichtung der Verkehrsüberwachung in zwei Schritten und somit bei eindeutiger Trennung zwischen Messplatz bzw. fachlicher Sicht und Messsituation bzw. Messaufgabe bzw. technischer Sicht erläutert. In einem ersten Schritt erfolgt eine grafische Einrichtung der örtlichen Gegebenheiten, wie zum Beispiel Fahrbahngeometrie, Verkehrsvorschriften und dergleichen, in der kombinierten Übersichtsdarstellung 112. Hierzu zählen: Anzahl der Fahrstreifen und ihrer jeweiligen Breite; geltende Geschwindigkeitslimits; klassenspezifische Fahrverbote oder Fahrgebote; Überholverbot; Abbiegeverstöße/Wendeverstöße; einzuhaltende Abstände (Tailgating) und dergleichen. In einem zweiten Schritt erfolgt eine grafische Einrichtung der Aufstellung bzw. Ausrichtung des Messsystems bzw. des zumindest einen Überwachungsgeräts (ggf. bestehend aus mehreren Sub-Systemen) sowie des überwachten Bereichs, zum Beispiel Fahrspur oder Fahrstreifen, je nach Messaufgabe. Parameter wie z. B. Ankommen/Abfließend; Links/Rechts-Messung; relative Positionierung der einzelnen Systemkomponenten; Front-/Heckfotografie werden nicht direkt vom Anwender eingegeben, sondern implizit aus der kombinierten Übersichtsdarstellung 112 bzw. schematischen Darstellung der Szene und des Messaufbaus vom Messsystem in die technischen Parameter abgeleitet.

Hinsichtlich des ersten Schrittes seien auch die folgenden Punkte angemerkt. Der Einrichteprozess beginnt mit der Aufnahme des Überwachungsortes bzw. des zu überwachenden Verkehrsüberwachungsplatzes. Dazu wird ein schematisches und perspektivisches Abbild der Straßengegebenheiten inkl. Verkehrsvorschriften erstellt, siehe insbesondere Fig. 3 und Fig. 4. Zunächst werden die örtlichen Gegebenheiten aus einer Menge von sogenannten Templates, wie zum Beispiel Gerade, Kurve, Gerade mit Mittelstreifen, Kreuzung, T-Kreuzung, Brücke etc., ausgewählt. Zur vereinfachten und intuitiven Auswahl werden die Templates durch repräsentative Symbole bzw. Bildsymbole wie die Typsymbole 413 dargestellt. Daraufhin wird das ausgewählte Typ Symbol 413 den örtlichen Gegebenheiten und den geltenden Verkehrsvorschriften entsprechend angepasst. Die Anzahl der Fahrstreifen in den einzelnen Bereichen der Szene sowie die Breite der einzelnen Streifen kann konfiguriert werden. Geltende Verkehrsregeln wie vorgeschriebene Fahrtrichtung, erlaubte Abbiegemöglichkeiten, Geschwindigkeitslimits (ggf. fahrzeugklassenspezifisch), sowie Fahrverbote und Fahrgebote (z. B. Busspur; Überholverbot für LKW), usw. können konfiguriert werden. Regeln, die z. B. zu bestimmten Zeiten gelten, aber nicht aktuell gültig sind (z. B. Tempo 80 von 22 bis 6 Uhr) werden ebenfalls dargestellt, aber eindeutig gekennzeichnet, beispielsweise ausgegraut dargestellt, sodass der Nutzer jederzeit sieht, dass es mehr gibt, als aktuell gültig ist. Die zuvor genannten Konfigurationen werden symbolisch in die kombinierte Übersichtsdarstellung 112 bzw. Szenendarstellung eingebracht, um dem Anwender eine möglichst reale Abbildung des Überwachungsortes bzw. Verkehrsüberwachungsplatzes anzuzeigen und somit einen direkten Zusammenhang zwischen Eingabe und Realität herzustellen. Dies kann anstelle einer reinen Parametereingabe wie zum Beispiel "Limit Fahrstreifen1 = x km/h", welche Abstraktionsvermögen erfordert, durchgeführt werden. Dabei wird, sofern zielführend, eine erneute (Teil-)Visualisierung der Szene verwendet. Dieser erste Schritt des Einrichteprozesses erfolgt vollständig unabhängig von der Messtechnik und der Messsituation. Der erste Schritt kann somit auch unabhängig von dem Messeinsatz erfolgen, gespeichert und für den Messeinsatz wieder geladen werden. Die hier vorgenommen Einstellungen werden im weiteren Verlauf des Einrichtevorgangs verwendet, um dem Messsystem bzw. dem zumindest einen Überwachungsgerät 130 ein Abbild der Wirklichkeit mitzuteilen, um Algorithmen zur Erkennung und Dokumentation von Verkehrsverstößen etc. zu speisen.

Hinsichtlich des zweiten Schrittes seien auch die folgenden Punkte angemerkt. Nach der grafischen Einrichtung des Überwachungsorts wird überlagert, d. h. angepasst an denselben, die Aufstellung und Ausrichtung des Messsystems (ggf. bestehend aus mehreren Sub-Systemen) bzw. des zumindest einen Überwachungsgerätes 130 sowie des überwachten Bereichs (z. B. Fahrstreifen) je nach Messaufgabe grafisch und gestengesteuert eingerichtet. Die kombinierte Übersichtsdarstellung 112 zeigt also nicht nur die Straßensituation am Messstandort bzw. Überwachungsort, sondern auch die Position und Ausrichtung der Messanlage bzw. des zumindest einen Überwachungsgeräts 130 im Verhältnis dazu. Das Gerätesymbol 116 lässt sich einfach per Drag-and-Drop an vordefinierte Positionen verschieben. Damit kann der Benutzer auf einfache und leicht verständliche Weise festlegen, ob sich das Überwachungsgerät 130 diesseits oder jenseits der Fahrbahn befindet. Ebenfalls kann er den dargestellten Mess- und Dokumentationsbereich (Fotobereich) entsprechend seiner Aufgabe durch die gestische Wechselwirkung drehen und so gemäß seiner Aufgabe festlegen, welche Fahrzeuge wie gemessen und dokumentiert werden sollen ("Ankommender/Abfließender Verkehr" "Front/Heckfoto erforderlich" etc.). Der Benutzer bildet also auch hier die für ihn sichtbare Realität ab, ohne Hintergrundwissen zu Messverfahren und leicht eventuell missverständliche Fachbegriffe wie "Links-/Rechtsmessung" berücksichtigen zu brauchen. Aus dem grafischen Abbild der kombinierten Übersichtsdarstellung 112 ist das Messsystem bzw. Überwachungssystem 100 in der Lage, die notwendigen Parameter (Links/Rechts Messung; Vorzeichen für relative Abstände; Front-/Heckfotografie; Ankommend/Abfließend; Überholer: ja/nein; etc.) abzuleiten und den Algorithmen zur Erkennung und Dokumentation von Verkehrsverstößen etc. zur Verfügung zu stellen.

Bei der Einrichtung der Verkehrsüberwachung kann eine schematische Darstellung aus Anwendersicht realisiert werden. Die gesamte Szene bzw. die kombinierte Übersichtsdarstellung 112 wird schematisch und perspektivisch aus Sicht des Anwenders dargestellt. Inhalt der schematischen Darstellung sind insbesondere: Stra-ßenszene inkl. Fahrstreifen; Randbereiche (ggf. vorhandene Mittelstreifen) einzeln positionierbare (Teil-)Komponenten des Messsystems (inkl. des Hauptsystems); der Anwender selbst und dergleichen. Die gesamte Szene wird perspektivisch (in die Ebene gekippt) dargestellt. Der Anwender befindet sich stets am unteren Bildschirmrand. Der Anwender kann das Anwender-Symbol bzw. Benutzersymbol 919 durch Drag&Drop auf die andere Straßenseite ziehen. Dies führt automatisch zu einer Spiegelung der gesamten Szene, wobei das Benutzersymbol 919 aber wieder an den unteren Bildschirm-Rand platziert wird, um stets eine schematische Darstellung aus Anwendersicht bereitzustellen. Die vorgesehene Fahrtrichtung wird perspektivisch ausgewählt und dargestellt. Die zu überwachende Fahrtrichtung wird perspektivisch ausgewählt und dargestellt. Die Blickrichtung der einzelnen Komponenten bzw. Überwachungsgeräte 130 wird durch einen dargestellten Bereich visualisiert, der vom Benutzer entsprechend der Ausrichtung platziert werden kann. Einzelne, abgesetzte Komponenten (inkl. Hauptsystem) werden relativ zueinander in der Szene perspektivisch positioniert (horizontal=rechts/links; vertikal=gleiche/gegenüberliegende Straßenseite). Abstände werden ohne Vorzeichen als absolute Werte eingetragen. Statt der schematischen Darstellung kann auch ein reales Abbild der Straßenszene, z. B. eine Draufsicht aus einer Landkarte oder Satellitenkarte oder ein aktuelles Foto mit Hilfe einer Drohne, verwendet werden.

Unter Bezugnahme auf die vorstehend beschriebenen Figuren, insbesondere die Figuren 22 bis 24, wird nachfolgend eine Generierung einer Szene bzw. kombinierten Übersichtsdarstellung 112 der Verkehrsüberwachung an dem Überwachungsort von einem Fahrzeug aus bzw. mit einem Fahrzeug als Startpunkt erläutert. Abweichend von den Figuren 3 bis 21, bei denen ein Startpunkt für die kombinierte Übersichtsdarstellung 112 eine Straßenszene ist, ausgehend von der ein Layer mit Fahrspuren automatisch oder halbautomatisch geschaffen wird, wird bei den Figuren 22 bis 24 als Startpunkt vom Fahrzeug ausgegangen. Das Fahrzeug bildet den Startpunkt, da dieses gemessen werden soll. Alle Steuerungsfunktionen bzw. gestische Wechselwirkungen aus den Figuren 22 bis 24 sind jedoch auch mit den in den Figuren 3 bis 21 gezeigten gestischen Wechselwirkungen kombinierbar.

Ausgangspunkt ist hierbei auf einer (nahezu) leer angezeigten kombinierten Übersichtsdarstellung 112 das Fahrzeugsymbol 114 mit einem Messsensorsymbol und den Steuerungshinweisen 2301, 2302, 2303 und 2304 und einem Fahrspursymbol, welches an beliebige Stellen verschoben werden kann. Die Situation oder Szene ergibt sich aus der Erkennung des menschlichen Auges, welches schnell und zuverlässig erkennen kann, wie viele Fahrspuren existieren und von wo aus gemessen werden soll. Auch die Fahrtrichtung ist schnell und einfach für den Menschen zu erkennen. Dieses Erkennen kann über gestische Wechselwirkungen durch eine Art intuitives Malen und Designen auf die Benutzerschnittstelle 110 übertragen werden. Solche Gesten bzw. Designfunktionen sind beispielsweise von einer Bedienung von Smartphones bekannt, insbesondere Wischen, Ziehen, Tippen.

Zunächst wird die Fahrzeugklasse eingegeben durch vertikales/horizontales Ziehen des Fahrzeugsymbols 114, wodurch sich das dazugehörige Symbol ändert, beispielsweise von "kleines Fahrzeug z. B. Motorrad, Fahrrad oder Fußgänger auch möglich" zu "größerem Fahrzeug, LKW mit 2, 3 oder mehr Achsen". Beim Loslassen wird die Fahrzeugklasse eingeloggt. Als nächstes kann die Fahrtrichtung gewählt werden für diese Spur, entsprechend dem vierten Steuerungshinweis 2304. Danach gibt man die mindeste und maximale Geschwindigkeitsgrenze gemäß dem dritten Steuerungshinweis 2303 ein. Finger auf blaues "30er Schild" nach hinten (links) verringert den minimalen Wert, nach rechts wird dieser erhöht. Finger auf rot-weißes "30er Schild" nach hinten (links) verringert den maximalen Wert, nach rechts wird dieser erhöht. In Kombination mit einem Urzeitsymbol können verschiedene Uhrzeiten oder weitere Bedingungen festgelegt werden. Das Messsensorsymbol wird nochmals hinsichtlich der Position kontrolliert und optional zur Korrektur verschoben. Mit Doppelklick auf das Fahrzeugsymbol 114 können weitere Fahrzeugklassen für eine erste Fahrspur definiert werden, soweit die Geschwindigkeits-(Eigenschafts-)limits unterschiedlich pro Fahrzeugklasse sein sollten. Mit dem ersten Steuerungshinweis 2301 (Wischen nach oben) wird die Fahrspur kopiert bzw. dupliziert mit allen gleichen Voreinstellungen der ersten Fahrspur. Es ist ggf. lediglich die Fahrtrichtung gemäß dem vierten Steuerungshinweis 2304 für eine zweite Fahrspur anzupassen. Soll lediglich eine neue Fahrspur hinzugefügt werden, so kann auch das Fahrspursymbol mit Wischen nach oben kopiert werden. Hierbei können vorgegebene Einstellungen der ursprünglichen Fahrspur beibehalten werden. D. h. hier würde dann wie bei der ersten Fahrspur eine Einstellung der Parameter erneut vorgenommen werden, hier z. B. mit Startpunkt "kleines Fahrzeug". Mit Wischen nach unten bzw. dem zweiten Steuerungshinweis 2302 kann man eine Fahrspur bzw. die Fahrspuren löschen. Es können auch andere Straßenszenen einfach und intuitiv durch gestische Wechselwirkung entworfen werden, z. B. durch ein mit den Fingern auf die Benutzerschnittstelle 110 gemaltes Kreuz eine Kreuzung erzeugt werden, wobei hier automatisch auch Ampeln und/oder Verkehrszeichen als Vorschlag an den einzelnen Fahrspuren als Bildsymbole bzw. Icons angeordnet sein würden. Eine kreisende Handbewegung bzw. Fingerführung als gestischer Wechselwirkung würde einen Kreisverkehr andeuten, dieser könnte durch weiteres Wischen quer zum Kreis unterteilt werden, sodass dann zuführende und abführende Fahrspuren entworfen werden. Des Weiteren können auch Kurven entworfen werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Einrichten einer Verkehrsüberwachung für einen Überwachungsort, wobei das Verfahren (200) folgende Schritte umfasst:
Ausgeben (210) eines Anzeigesignals (140) an eine Benutzerschnittstelle (110), wobei das Anzeigesignal (140) geeignet ist, um mittels der Benutzerschnittstelle (110) eine Anzeige zumindest eines Bildsymbols (114, 116, 313, 315, 413, 517, 518, 618, 916, 919, 1314, 1413, 1618, 1713) in einer kombinierten Übersichtsdarstellung (112) für den Überwachungsort zu bewirken, das sich auf mindestens einen konfigurierbaren Parameter der Verkehrsüberwachung bezieht, wobei das zumindest eine Bildsymbol (114, 116, 313, 315, 413, 517, 518, 618, 916, 919, 1314, 1413, 1618, 1713) durch eine gestische Wechselwirkung mit einem Benutzer beeinflussbar ist, um den mindestens einen konfigurierbaren Parameter zu konfigurieren;
Einlesen (220) eines Benutzereingabesignals (150) von der Benutzerschnittstelle (110), wobei das Benutzereingabesignal (150) eine durch die gestische Wechselwirkung mit dem zumindest einen Bildsymbol (114, 116, 313, 315, 413, 517, 518, 618, 916, 919, 1314, 1413, 1618, 1713) vorgenommene und durch Gestenerkennung erkannte Eingabe eines Benutzers zum Konfigurieren des mindestens einen Parameters repräsentiert; und
Konfigurieren (230) des zumindest einen konfigurierbaren Parameters abhängig von dem Benutzereingabesignal (150), um die Verkehrsüberwachung einzurichten, **dadurch gekennzeichnet, dass** der zumindest eine konfigurierbare Parameter zumindest ein konfigurierbarer Fahrzeugparameter ist, wobei der zumindest eine konfigurierbare Fahrzeugparameter eine Fahrzeugklasse repräsentiert und dass die Fahrzeugklasse durch Kneifen mit zwei Fingern und/oder Spreizen mit zwei Fingern als gestischer Wechselwirkung beeinflussbar ist, wobei durch Kneifen eine kleinere Fahrzeugklasse und durch Spreizen eine größere Fahrzeugklasse ausgewählt wird.

2. Verfahren (200) gemäß Anspruch 1, wobei im Schritt (210) des Ausgebens das Anzeigesignal (140) an eine berührungsempfindliche und/oder berührungsfreie Benutzerschnittstelle (110) ausgegeben wird, wobei im Schritt (220) des Einlesens das Benutzereingabesignal (150) von der berührungsempfindlichen und/oder berührungsfreien Benutzerschnittstelle (110) eingelesen wird, wobei die gestische Wechselwirkung mittels der Benutzerschnittstelle (110) berührungsempfindlich und/oder berührungsfrei erkennbar ist.

3. Verfahren (200) gemäß einem der vorangegangenen Ansprüche, mit einem Schritt (240) des Aktualisierens des Anzeigesignals (140) ansprechend auf das Benutzereingabesignal (150) und/oder unter Verwendung des zumindest einen im Schritt (230) des Konfigurierens konfigurierten Parameters, um ein aktualisiertes Anzeigesignal zur Ausgabe an die Benutzerschnittstelle (110) bereitzustellen.

4. Steuergerät (120), das eingerichtet ist, um die Schritte (210, 220, 230; 240) des Verfahrens (200) gemäß einem der vorangegangenen Ansprüche in entsprechenden Einheiten (122, 124, 126) auszuführen und/oder anzusteuern.

5. Computerprogramm, das dazu eingerichtet ist, die Schritte des Verfahrens (200) gemäß einem der Ansprüche 1 bis 3 auszuführen und/oder anzusteuern.

6. Maschinenlesbares Speichermedium, auf dem das Computerprogramm nach Anspruch 5 gespeichert ist.

7. Verkehrsüberwachungssystem (100) zum Durchführen einer Verkehrsüberwachung für einen Überwachungsort, wobei das Verkehrsüberwachungssystem (100) folgende Merkmale aufweist:
das Steuergerät (120) gemäß Anspruch 4;
die Benutzerschnittstelle (110), wobei die Benutzerschnittstelle (110) signalübertragungsfähig mit dem Steuergerät (120) verbindbar oder verbunden ist; und
zumindest ein Überwachungsgerät (130), wobei das zumindest eine Überwachungsgerät (130) an dem Überwachungsort anordenbar oder angeordnet ist, wobei das zumindest eine Überwachungsgerät (130) signalübertragungsfähig mit dem Steuergerät (120) verbindbar oder verbunden ist.

## Claims

1. Method (200) for setting up traffic monitoring for a monitoring location, wherein the method (200) comprises the following steps:
outputting (210) a display signal (140) to a user interface (110), wherein the display signal (140) is suitable to effect, by means of the user interface (110), a display of at least one image symbol (114, 116, 313, 315, 413, 517, 518, 618, 916, 919, 1314, 1413, 1618, 1713) in a combined overview (112) for the monitoring location, which image symbol relates to at least one configurable parameter of the traffic monitoring, wherein the at least one image symbol (114, 116, 313, 315, 413, 517, 518, 618, 916, 919, 1314, 1413, 1618, 1713) can be influenced by gestural interaction with a user in order to configure the at least one configurable parameter;
reading in (220) a user input signal (150) from the user interface (110), wherein the user input signal (150) represents an input of a user for configuring the at least one parameter, which input is made by the gestural interaction with the at least one image symbol (114, 116, 313, 315, 413, 517, 518, 618, 916, 919, 1314, 1413, 1618, 1713) and recognized by gesture recognition; and
configuring (230) the at least one configurable parameter according to the user input signal (150) to set up the traffic monitoring, **characterized in that** the at least one configurable parameter is at least one configurable vehicle parameter, wherein the at least one configurable vehicle parameter represents a vehicle class, **and in that** the vehicle class can be influenced by pinching with two fingers and/or spreading with two fingers as the gestural interaction, wherein a smaller vehicle class is selected by pinching and a larger vehicle class is selected by spreading.

2. Method (200) according to claim 1, wherein, in the step (210) of outputting, the display signal (140) is output to a touch-sensitive and/or contactless user interface (110), wherein, in the step (220) of reading in, the user input signal (150) is read in from the touch-sensitive and/or contactless user interface (110), wherein the gestural interaction is detectable in a touch-sensitive and/or contactless manner by means of the user interface (110).

3. Method (200) according to any one of the preceding claims, comprising a step (240) of updating the display signal (140) in response to the user input signal (150) and/or using the at least one parameter configured in the step (230) of configuring, in order to provide an updated display signal for output to the user interface (110).

4. Controller (120) configured to execute and/or control the steps (210, 220, 230; 240) of the method (200) according to any one of the preceding claims in corresponding units (122, 124, 126).

5. Computer program configured to execute and/or control the steps of the method (200) according to any one of claims 1 to 3.

6. Machine-readable storage medium on which the computer program according to claim 5 is stored.

7. Traffic monitoring system (100) for carrying out traffic monitoring for a monitoring location, wherein the traffic monitoring system (100) has the following features:
the controller (120) according to claim 4;
the user interface (110), wherein the user interface (110) can be or is connected to the controller (120) so as to be capable of signal transmission; and
at least one monitoring device (130), wherein the at least one monitoring device (130) can be or is arranged at the monitoring location, wherein the at least one monitoring device (130) can be or is connected to the controller (120) so as to be capable of signal transmission.

## Revendications

1. Procédé (200) permettant de mettre en place une surveillance de trafic pour un site de surveillance, dans lequel le procédé (200) comprend les étapes suivantes :
envoi (210) d'un signal d'affichage (140) à une interface utilisateur (110), dans lequel le signal d'affichage (140) est adapté pour provoquer, au moyen de l'interface utilisateur (110), un affichage d'au moins une icône d'image (114, 116, 313, 315, 413, 517, 518, 618, 916, 919, 1314, 1413, 1618, 1713) dans une vue d'ensemble (112) combinée pour le site de surveillance, laquelle image d'icône se rapporte à au moins un paramètre configurable de la surveillance de trafic, dans lequel l'au moins une icône d'image (114, 116, 313, 315, 413, 517, 518, 618, 916, 919, 1314, 1413, 1618, 1713) peut être influencée par une interaction gestuelle avec un utilisateur pour configurer l'au moins un paramètre configurable ;
lecture (220) d'un signal d'entrée utilisateur (150) par l'interface utilisateur (110), dans lequel le signal d'entrée utilisateur (150) représente une entrée d'un utilisateur, laquelle est effectuée par l'interaction gestuelle avec l'au moins une icône d'image (114, 116, 313, 315, 413, 517, 518, 618, 916, 919, 1314, 1413, 1618, 1713) et détectée par reconnaissance gestuelle, pour configurer l'au moins un paramètre ; et
configuration (230) de l'au moins un paramètre configurable en fonction du signal d'entrée utilisateur (150) pour mettre en place la surveillance de trafic, **caractérisé en ce que** l'au moins un paramètre configurable est au moins un paramètre de véhicule configurable, dans lequel l'au moins un paramètre de véhicule configurable représente une catégorie de véhicule, et **en ce que** la catégorie de véhicule peut être influencée par pincement avec deux doigts et/ou par écartement avec deux doigts en tant qu'interaction gestuelle, dans lequel le pincement permet de sélectionner une catégorie de véhicule plus petite et l'écartement permet de sélectionner une catégorie de véhicule plus grande.

2. Procédé (200) selon la revendication 1, dans lequel, à l'étape (210) d'envoi, le signal d'affichage (140) est envoyé à une interface utilisateur (110) tactile et/ou sans contact, dans lequel, à l'étape (220) de lecture, le signal d'entrée utilisateur (150) est lu par l'interface utilisateur (110) tactile et/ou sans contact, dans lequel l'interaction gestuelle est détectable de façon tactile et/ou sans contact au moyen de l'interface utilisateur (110).

3. Procédé (200) selon l'une des revendications précédentes, comportant une étape (240) de mise à jour du signal d'affichage (140) en réponse au signal d'entrée utilisateur (150) et/ou à l'aide de l'au moins un paramètre configuré à l'étape (230) de configuration pour fournir un signal d'affichage mis à jour destiné à être envoyé à l'interface utilisateur (110).

4. Appareil de commande (120) configuré pour exécuter et/ou commander les étapes (210, 220, 230 ; 240) du procédé (200) selon l'une des revendications précédentes dans des unités (122, 124, 126) correspondantes.

5. Programme informatique configuré pour exécuter et/ou commander les étapes du procédé (200) selon l'une des revendications 1 à 3.

6. Support de stockage lisible par machine, sur lequel le programme informatique selon la revendication 5 est stocké.

7. Système de surveillance de trafic (100) permettant de réaliser une surveillance de trafic pour un site de surveillance, dans lequel le système de surveillance de trafic (100) présente les caractéristiques suivantes :
l'appareil de commande (120) selon la revendication 4 ;
l'interface utilisateur (110), dans lequel l'interface utilisateur (110) peut être connectée ou est connectée à l'appareil de commande (120) de manière à pouvoir transmettre des signaux ; et
au moins un appareil de surveillance (130), dans lequel l'au moins un appareil de surveillance (130) peut être disposé ou est disposé sur le site de surveillance, dans lequel l'au moins un appareil de surveillance (130) peut être connecté ou est connecté à l'appareil de commande (120) de manière à pouvoir transmettre des signaux.
